# EUROPÄISCHE PATENTANMELDUNG

(11) **EP 2 929 777 A1**
(43) Veröffentlichungstag der Anmeldung: **14.10.2015**
(21) Anmeldenummer: 15000153.5
(22) Anmeldetag: 20.01.2015
(51) Int. Cl.: A01G 5/04, C08J 9/36, D06M 23/08, D06M 23/16, D06N 7/00, D06Q 1/10

(54) **Beschichteter Körper und Verfahren zu seiner Herstellung**

(30) Priorität: 20.01.2014 DE 102014000505
(71) Anmelder: Scheible, Alexander, 75449 Wurmberg (DE)
(72) Erfinder: Scheible, Alexander, 75449 Wurmberg (DE)
(74) Vertreter: Völger, Karl Wolfgang

(57) **Zusammenfassung**

Die vorliegende Erfindung betrifft einen Körper (1), umfassend einen Träger (3) und zumindest an einer der Oberflächen (5) des Trägers (3) eine Beschichtung (7), die einen Klebstoff (9) und zumindest ein Beschichtungsmaterial (11) aufweist, wobei das Beschichtungsmaterial (11) zumindest ein natürliches und/oder ein künstliches Material umfasst.

Die Erfindung bezieht sich ferner auf ein Verfahren zur Herstellung eines erfindungsgemäßen Körpers (1) sowie auf dessen Verwendung.

## Beschreibung

Die vorliegende Erfindung bezieht sich auf einen beschichteten Körper und ein Verfahren zu seiner Herstellung sowie auf seine Verwendung.

Beschichtete Körper für verschiedene Anwendungen und Einsatzgebiete sind aus dem Stand der Technik an sich bekannt. Allerdings sind keine Körper erhältlich, die mit natürlichen, natürlich wirkenden oder künstlichen Materialien beschichtet sind und sich problemlos für Dekorationszwecke und/oder den Garten- und Landschaftsbau eignen.

Für Dekorationszwecke sind in der Regel Steckschäume im Einsatz, die sowohl für die Trockenfloristik wie auch für die Frischfloristik verwendet werden. Solche Steckschäume werden beispielsweise unter dem Handelsnamen Mosy^{®} von der Mosy GmbH, Thedinghausen, Deutschland, oder unter dem Handelsnamen Oasis^{®} von Smithers-Oasis Germany GmbH, Grünstadt, Deutschland, oder als Handelsmarken bzw. No-Name-Produkte angeboten.

Mosy^{®} ist eine Steckunterlage u.a. für floristische Gestecke aller Art, die Objekte wie Blumen, Zweige etc. fixiert und so die Gestaltung beispielsweise von Gestecken erleichtert. Es wird für die unterschiedlichsten Anwendungsgebiete in verschiedenen Formen angeboten.

Als Nassschaum wird Mosy^{®} aus einem Kunstharz als Grundstoff hergestellt, indem Resole und andere Rohstoffe nach speziellen Rezepturen des Herstellers umgesetzt werden. Dem Harz werden dabei spezielle Farben, Zellregulatoren, Härter, Treibmittel etc. zugegeben, bevor es FCKW-frei in speziellen Heißformen zu ca. 3 m³ großen Blöcken verschäumt wird. Nach dem Aushärten können die Blöcke mittels Säg- und Fräsautomaten in die vielfältigsten Formen gebracht werden.

Als Trockenschaum besteht Mosy^{®} aus einem Polyurethanschaum, der aus einer Polyolkomponente und einer Isocyanatkomponente in einem bestimmten Mischungsverhältnis aufgebaut ist. Nach der Zugabe spezieller Additive wie Farben und Zellregulatoren wird das Gemisch in einer Kaltform FCKW-frei zu ca. 3 m³ großen Blöcken aufgeschäumt. Nach einer Aushärtungszeit von 5 Tagen kann der Schaum anschließend in die vielfältigsten Formen mittels Säg- und Fräsautomaten gebracht werden.

In beiden Fällen von Trockenfloristik und Frischfloristik müssen die für sich genommen optisch unansehnlichen Steckschäume nach dem Erstellen der Arrangements mit einem optisch ansprechenden Material abgedeckt werden, beispielsweise mit Moosen oder Flechten, die mit Krampen oder Klebepunkten befestigt werden. Nachteilig an diesen Arbeiten ist, dass die aufwändig und ferner kosten- und zeitintensiv sind. Die Dekorationen stellen somit einen Spagat zwischen Wirtschaftlichkeit und Kunst dar.

Jedoch lassen sich nicht alle optisch ansprechenden Materialien zum Abdecken der Steckschäume einsetzen, denn mit Krampen oder Klebepunkten lassen sich keine stückigen oder granularen Stoffe fixieren. Mit herkömmlichen Klebesprays lassen sich dagegen keine Material-Konglomerate verwirklichen.

Vereinzelt werden vorgefertigte Beschichtungen angeboten, die jedoch den Nachteil aufweisen, dass sie meist optisch nicht sehr ansprechend sind und zudem nur bedingt mit Dekorationsmaterial bzw. Frisch- oder Trockenblumen durchsteckt werden können. Zudem sind Steckschäume mit solchen vorgefertigten Beschichtungen durch die Größe der Blöcke begrenzt. Größere Arrangements sind daher kaum befriedigend herzustellen.

Zudem müssen die als Basis verwendeten Steckschäume zur Verwendung in der Frischfloristik nachträglich und wiederholt befeuchtbar sein, um die Dekorationen für einen gewissen Zeitraum haltbar zu machen.

Personen, die in der Frisch- oder Trockenfloristik bzw. in der Erstellung von dekorativen Arrangements tätig sind, nutzen daher in der Regel die herkömmlichen Mittel und Methoden, da ihre erste Aufgabe die Fertigstellung der Arrangements und nicht die Optimierung der Methode ist.

Die von den herstellenden Firmen angebotenen Steckschäume werden zwar kontinuierlich weiterentwickelt, diese Entwicklung beschränkt sich bislang aber beispielsweise auf die Variation mit verschiedenen Formen und/oder Farben sowie Zusatznutzen im Hinblick auf Erhöhung der Wasserspeicherungskapazität der Steckschäume oder die Einarbeitung von Nährstoffen in die Steckschäume zur Verlängerung der Haltbarkeit von Frischblumen. Der Fokus liegt dabei auf Lösungen in erster Linie für die Frischfloristik. Die Trockenfloristik und die Dekoration laufen eher nebenher mit.

Ausgehend von den vorstehend insbesondere in Bezug auf die Beschichtungen genannten Nachteilen des Standes der Technik liegt der vorliegenden Erfindung die Aufgabe zugrunde, einen mit natürlichen, natürlich wirkenden oder künstlichen Materialien beschichteten Körper für Dekorationszwecke, Floristik und/oder den Garten- und Landschaftsbau bereitzustellen, der einfach handzuhaben ist und darüber hinaus eine ansprechende Optik bietet. Die Aufgabe der Erfindung bestehtferner darin, ein Verfahren zur Herstellung des beschichteten Körpers anzugeben.

Diese Aufgabe wird in einem ersten Aspekt der vorliegenden Erfindung durch einen Körper (1) gelöst, der umfasst:
- einen Träger (3) und
- zumindest an einer der Oberflächen (5) des Trägers (3) eine Beschichtung (7), die einen Klebstoff (9) und zumindest ein Beschichtungsmaterial (11) aufweist, wobei das Beschichtungsmaterial (11) zumindest ein natürliches und/oder ein künstliches Material umfasst.

In einem weiteren Aspekt wird die Aufgabe erfindungsgemäß durch ein Verfahren zur Herstellung eines erfindungsgemäßen Körpers (1) gelöst, umfassend die Schritte:
a) Bereitstellen eines Trägers (3),
b) Behandeln zumindest einer der Oberflächen (5) des Trägers (3) mit einem Klebstoff (9),
c) Aufbringen eines Beschichtungsmaterials (11) auf die mit dem Klebstoff (9) behandelte Oberfläche (5) des Trägers (3) und
d) Fertigstellen einer Beschichtung (7), die den Klebstoff (9) und zumindest ein Beschichtungsmaterial (11) aufweist, auf dem Träger (3),
   wobei das Beschichtungsmaterial (11) zumindest ein natürliches und/oder ein künstliches Material umfasst.

Nachfolgend wird die Erfindung im Detail beschrieben.

Die vorliegende Erfindung bezieht sich in einem ersten Aspekt auf einen Körper (1), der einen Träger (3) und zumindest an einer der Oberflächen (5) des Trägers (3) eine Beschichtung (7) umfasst. Die Beschichtung (7) weist dabei einen Klebstoff (9) und zumindest ein Beschichtungsmaterial (11) auf. Das Beschichtungsmaterial (11) umfasst zumindest ein natürliches und/oder ein künstliches Material.

Der erfindungsgemäße Körper (1) hat gegenüber dem Stand der Technik den Vorteil, dass durch das Beschichtungsmaterial (11) ein optisch ansprechendes Erscheinungsbild geschaffen wird, so dass der Körper (1) für hochwertige Dekorationen und die Frisch- oder Trockenfloristik einsetzbar ist. Insbesondere werden Halbzeuge aus bereits vorbeschichteten Formen bereitgestellt, die direkt eingesetzt werden können. Ein nachträgliches Dekorieren von optisch unansehnlichen Steckschäumen oder anderen Trägermaterialien kann entfallen, was Zeit und Geld spart. Ein wichtiger Vorteil besteht in der Penetrierbarkeit des Beschichtungsmaterials (11).

Trotz der Beschichtung (7) bleiben die erfindungsgemäßen Körper (1) so einsetzbar wie die Produkte nach dem Stand der Technik, d.h. sie lassen sich im Wesentlichen in gleicher Weise penetrieren, verformen, zuschneiden oder befeuchten.

Der Träger (3) umfasst zumindest an einer der Oberflächen (5) die Beschichtung (7). Im Falle von im Wesentlichen zweidimensionalen Trägern (3) befindet sich die Beschichtung (7) in der Regel auf der (sichtbaren) Oberfläche (5). Ist der Träger (3) dreidimensional ausgestaltet, kann sich die Beschichtung (7) neben der (sichtbaren) Oberfläche (5) zusätzlich auch auf einer oder mehreren Seitenflächen (5a, 5b, 5c, 5x) des Trägers befinden.

Das Beschichtungsmaterial (11) ist erfindungsgemäß zumindest ein natürliches und/oder ein künstliches Material.

Beispiele für natürliche Beschichtungsmaterial (11) sind Erden, Sande, Moose, Flechten, Hölzer, Blätter, Gräser, oder Materialien, die verschiedene Bodentypen abbilden, wie Beeterde, Torferde, Kulturboden, Waldboden mit Tannennadeln, Waldboden mit Rindenmulch, Waldboden mit Laub, Erde mit Moos, Erde mit Kieseln oder Sandboden.

Zu den erfindungsgemäß verwendeten künstlichen Beschichtungsmaterialien (11) zählen Kunstschnee oder Kunststoffgranulate und solche Materialien, die natürliche Beschichtungsmaterialien (11) identisch oder sehr ähnlich nachbilden. Ferner sind vollständig künstliche Beschichtungsmaterialien (11) vorgesehen, um beispielsweise abstrakte Gestaltungen schaffen zu können.

Nach der vorliegenden Erfindung sind natürliche Beschichtungsmaterialien (11) bevorzugt.

Als Klebstoff (9) werden spezielle industrielle Klebstoffe verwendet, die den Anforderungen der vorliegenden Erfindung genügen. Vorteilhafterweise werden teilelastische oder dauerelastische Klebstoffe verwendet, insbesondere Sprühklebstoffe. Bei diesen Klebstoffen handelt es sich je nach Ausführungsform der vorliegenden Erfindung in vorteilhafter Weise um Kontaktklebstoffe oder um Haftklebstoffe, jeweils auf der Basis von Styren-Butadien-Kautschuken. Insbesondere ist der Klebstoff (9) gemäß der vorliegenden Erfindung beständig gegen Feuchtigkeit, d.h. verliert seine Klebkraft auch in einer feuchten Umgebung nicht.

In einer ersten Ausführungsform ist der Träger (3) ein zumindest semipermeabler Träger (3a), der eine im Wesentlichen zweidimensionale Ausdehnung aufweist.

Unter dem Begriff "im Wesentlichen zweidimensionale Ausdehnung" wird im Sinne der Erfindung verstanden, dass die Dicke des Trägers (3a) nur einen Bruchteil seiner Flächenausdehnung beträgt. Hier hat es sich als zweckmäßig herausgestellt, zur Kennzeichnung ein Flächengewicht anzugeben. Der im Wesentlichen zweidimensionalen Träger (3a) der ersten Ausführungsform weist vorzugsweise ein Flächengewicht von 50 g/m² bis 300 g/m² auf. Die Dicke des Trägers (3a) liegt insbesondere zwischen 0,1 mm und 30 mm.

Die Dicke der Beschichtung (7) auf dem Träger (3a) hängt stark von dem verwendeten Beschichtungsmaterial (11) ab und kann von weniger als einem Millimeter bis zu mehreren Zentimetern reichen, bevorzugt von 0,5 mm bis 100 mm. Hierbei muss die Dicke der Beschichtung (7) in einer vernünftigen Relation zu der Dicke des Trägers (3a) stehen. Es hat sich als sinnvoll herausgestellt, wenn die Dicke der Beschichtung (7) maximal die zehnfache Dicke des Trägers (3a) beträgt. Bevorzugt liegt die Dicke der Beschichtung (7) zwischen 0,1 mm und 300 mm. Die Dicke der Beschichtung (7) hängt im Wesentlichen von dem optisch zu erzielenden Ergebnis ab, vorausgesetzt, sie bleibt penetrierbar.

Der Träger (3a) ist zudem zumindest semipermeabel, d.h. dass insbesondere Feuchtigkeit (in Form von Wasser) diesen von seiner Oberfläche (5) her zu seiner Unterseite hin durchdringen kann, während ein Durchdringen von Feuchtigkeit in der Gegenrichtung im Wesentlichen unterbunden ist. In diesem Fall ist auch die Beschichtung (7) zumindest semipermeabel und in keinem Fall impermeabel, so dass sie Feuchtigkeit (in Form von Wasser) von der Oberseite her zu dem Träger (3a) durchlässt. Die Beschichtung (7) kann auch vollständig permeabel sein, da der Träger (3a) selbst die erfindungsgemäß erforderliche Semipermeabilität aufweist.

Der Träger (3a) kann insbesondere als textiles Vlies, semipermeable Polymerfolie oder dünne Schaumstoffmatte sowie als Vlies oder Matte aus einem organischen Material wie Kokosfasern vorliegen. Der Träger (3a) in dieser speziellen Ausführungsform ist daher in gewissen Grenzen verformbar, d.h. er kann gefaltet, gewellt oder gerollt werden. Hierzu wird vorteilhafterweise als Klebstoff (9) für das Beschichtungsmaterial (11) ein dauerelastischer Klebstoff verwendet. Zudem wird das Beschichtungsmaterial (11) so gewählt, dass es der Verformung in gewissen Grenzen folgen kann. Hierzu werden insbesondere kleinteiligere Beschichtungsmaterialien (11) eingesetzt, weniger grob strukturierte. Ferner ist der Träger (3a) nahezu beliebig zuschneidbar, um ihn so an die Einsatzgegebenheiten anzupassen.

In einer alternativen zweiten Ausführungsform ist der Träger (3) ein geschäumter, formstabiler Träger (3b), der eine im Wesentlichen dreidimensionale Ausdehnung aufweist.

Unter dem Begriff "dreidimensionale Ausdehnung" wird im Sinne der Erfindung verstanden, dass die drei Abmessungen Länge, Breite und Höhe des Trägers (3b) in der gleichen Dimension liegen, d.h. dass ein räumlicher Gegenstand vorliegt und nicht ein im Wesentlichen flächiger Gegenstand wie in der ersten Ausführungsform.

Der Träger (3b) ist zudem geschäumt und formstabil. Unter "geschäumt" wird hier verstanden, dass das Material des Trägers (3b) ein Netzwerk ausbildet und der Träger (3b) eine hohe Porosität aufweist. Hierzu wird bei der Herstellung des Trägers (3b) ein geeignetes Material, beispielsweise Polyurethan oder Polyester, aufgeschäumt. Die Porosität kann je nach Anwendungsfall des erfindungsgemäßen Körpers (1) offen oder geschlossen sein. Unter "formstabil" ist im Folgenden zu verstehen, dass der Träger (3b) für sich alleine und zusammen mit der Beschichtung (7) als Körper (1) seine ursprüngliche Form stabil beibehält, beispielsweise nicht in sich zusammenfällt. Allerdings bedeutet formstabil in diesem Zusammenhang nicht, dass der Träger (3b) nicht deformiert werden kann, um ihm eine bestimmte, gewünschte Form zu geben.

Der Träger (3b) kann insbesondere als inelastischer Steckschaum vorliegen. Im Gegensatz zu dem Körper (1) mit dem zweidimensionalen Träger (3a) lässt sich der Körper (1) mit dem dreidimensionalen Träger (3b) nicht falten oder rollen. Dies ist für die vorgesehene Verwendung auch nicht notwendig.

Wird der Körper (1) mit dem Träger (3b) für die Frischfloristik verwendet, hat der Träger (3b) vorzugsweise eine offene Porosität, um Wasser aufnehmen und über einen gewissen Zeitraum speichern zu können. Beim Einsatz in der Trockenfloristik kann der Träger (3b) auch geschlossenporig sein.

Für die Stabilität des Körpers (1) und seine Werthaltigkeit hat es sich als vorteilhaft herausgestellt, wenn die Beschichtung (7) von dem Träger (3) nicht delaminierbar ist. Hierunter wird verstanden, dass sich die Beschichtung (7), bzw. weder der Klebstoff (9) noch das Beschichtungsmaterial (11) von dem Träger (3) abziehen lassen.

Das Merkmal, dass der zweidimensionale Träger (3a) semipermeabel ist und damit zumindest eine teilweise poröse Struktur hat bzw. dass der dreidimensionale Träger (3b) geschäumt ist und eine gewisse Porosität aufweist, begünstigen das Vorhandensein einer nicht delaminierbaren Beschichtung (7), da der Klebstoff (9) und ggf. auch das Beschichtungsmaterial (11) in die Struktur zumindest teilweise eindringen können, um so nach dem Aushärten einen guten Halt der Beschichtung zu gewährleisten. Untersuchungen haben gezeigt, dass beim Versuch, die Beschichtung (7) vom Träger (3) abzuziehen, eher der Träger (3) in sich reißt, als dass sich die Beschichtung (7) delaminieren lässt. Ferner ist die Beschichtung (7) von dem Träger (3) auch unter Einwirkung von Feuchtigkeit nicht delaminierbar.

Vorzugsweise sind der Träger (3) und die Beschichtung (7) jeweils manuell penetrierbar. Unter "manuell penetrierbar" wird verstanden, dass beim Einsatz des erfindungsgemäßen Körpers (1) Dekorationsmaterial von Hand durch oder in den Körper (1) gesteckt werden kann, dass also keine Vorarbeiten wie Bohren notwendig sind, um beispielsweise ein Dekorationselement in einen zweidimensionalen Träger (3a) oder eine frische Schnittblume (ggf. mit Stützdraht) in einen dreidimensionalen Träger (3b) zu stecken.

Die Kraft, die zum manuellen Penetrieren des Trägers (3) und/oder der Beschichtung (7) aufgebracht werden muss, beträgt höchstens 30 N. Eine höhere Kraft zum manuellen Penetrieren aufzubringen ist nicht sinnvoll, da dann die Gefahr besteht, dass einzusteckendes Material beschädigt würde. Die betrifft insbesondere die Stiele bzw. Stängel von frischen Blumen.

In einer Weiterbildung der Erfindung beträgt die Kraft zum manuellen Penetrieren der Beschichtung (7) zwischen 0,3 N und 25 N, vorzugsweise zwischen 2,5 N und 20 N, insbesondere zwischen 5 N und 18 N. Die bevorzugten Bereiche sind besonders auf die am meisten verwendeten Materialien abgestimmt.

In einem zweiten Aspekt betrifft die vorliegende Erfindung ein Verfahren zur Herstellung eines erfindungsgemäßen Körpers (1), wie er vorstehend beschrieben wurde. Das Verfahren umfasst zunächst den Schritt a) Bereitstellen eines Trägers (3) und anschließend den Schritt b) Behandeln zumindest einer der Oberflächen (5) des Trägers (3) mit einem Klebstoff (9). Unter "Behandeln" wird hier verstanden, dass der Klebstoff (9) in geeigneter Weise auf den Träger (3) aufgebracht wird, beispielsweise durch Streichen, Rollen, Tauchen oder Sprühen. Erfindungsgemäß ist das Sprühen des Klebstoffs (9) bevorzugt.

Wird mehr als eine der Oberflächen (5) des Trägers (3) mit einem Klebstoff (9) behandelt, können je nach Lage der zu behandelnden Oberflächen (5) alle gemeinsam behandelt, oder jede Oberfläche (5) für sich behandelt werden. Die genaue Ausführung hängt von der Art des Beschichtungsmaterials (11) ab.

Im erfindungsgemäßen Verfahren folgt Schritt c) Aufbringen eines Beschichtungsmaterials (11) auf die mit dem Klebstoff (9) behandelte Oberfläche (5) des Trägers (3). Hierbei wird das Beschichtungsmaterial (11) in geeigneter Weise aufgebracht, beispielsweise durch Streuen, Rollen, Tauchen, Legen oder Aufbringen von Druck. Die Weise, wie das Beschichtungsmaterial (11) aufgebracht wird, hängt stark von der Art des Beschichtungsmaterials (11) sowie von dem zu erreichenden optischen Erscheinungsbild ab. So können feine Beschichtungsmaterialien (11) wie Sande oder Erden vorteilhafterweise gestreut werden, während grobstrukturierte Beschichtungsmaterialien (11) wie Mulche eher gelegt werden. Durch Streuen wird zudem ein optisch leichteres Erscheinungsbild erreicht, beispielsweise bei Laub oder Tannennadeln. Erden, Moose und Sande können dagegen zum Erreichen eines optisch festen Erscheinungsbilds auch mit Druck aufgebracht werden, so dass eine Basis geschaffen wird, auf die in einem weiteren Schritt des Aufbringens optisch lose wirkendes Beschichtungsmaterial (11) aufgebracht wird.

In Schritt d) erfolgt das Fertigstellen einer Beschichtung (7), die den Klebstoff (9) und zumindest ein Beschichtungsmaterial (11) aufweist, auf dem Träger (3), wobei das Beschichtungsmaterial (11) zumindest ein natürliches und/oder ein natürlich wirkendes und/oder ein künstliches Material umfasst. Dieses wurde vorstehend bereits ausführlicher beschrieben. In Schritt d) härtet der Klebstoff (9) aus.

Das erfindungsgemäße Verfahren bietet den Vorteil eines einfachen und kostengünstigen Verfahrens zur Herstellung eines erfindungsgemäßen Körpers (1). Durch die vorgegebenen Verfahrensschritte kann ein Körper (1) hergestellt werden, der durch das Beschichtungsmaterial (11) ein optisch ansprechendes Erscheinungsbild hat und daher für hochwertige Dekorationen und die Frisch- oder Trockenfloristik einsetzbar ist.

Vorteile eines derart hergestellten Körpers (1) mit einem im Wesentlichen zweidimensionalen Träger (3a) sind seine Flexibilität, Wasserspeicherfähigkeit und ökologische Verträglichkeit, während er zudem durchlässig für Wasser, Sauerstoff und Nährstoffe ist, so dass ein günstiges Mikroklima unterhalb dieses Körpers (1) entstehen kann. Der Körper (1) ist ferner erosionshemmend, einfach zu befestigen, zuschneidbar, bepflanzbar, in sich stabil, witterungsbeständig, lichtundurchlässig, UVstabilisiert und erfüllt die Brandschutzklasse B1. Er ist einfach in der Handhabung und ermöglicht ein schnelles Verlegen.

Wichtige Vorteile sind ferner, dass Körper (1) mit einem im Wesentlichen dreidimensionalen Träger (3b) penetrierbar, zuschneidbar und wasserspeichernd sind sowie die Brandschutzklasse B1 erfüllen.

Die Verfahrensschritte stellen zudem sicher, dass wichtige Eigenschaften des Trägers (3) im fertigen Körper (1) erhalten bleiben. Dies betrifft insbesondere die Semipermeabilität des zweidimensionalen Trägers (3a) und die Porosität des dreidimensionalen Trägers (3b), insbesondere eine offene Porosität. Beim Sprühen des Klebstoffs (9) wird keine durchgehende und damit ggf. abdichtende Klebstoffschicht erzeugt, so dass die Eigenschaften erhalten bleiben. Zudem wird der Klebstoff (9) nicht in einer Dicke aufgebracht, die nach dem Aushärten eine manuell nicht mehr penetrierbare Schicht ergibt.

Vorteilhafterweise umfasst das erfindungsgemäße Verfahren nach Schritt c) einen Schritt c1) Anpressen des Beschichtungsmaterials (11). Dieser Teilschritt ist insbesondere bei feinteiligeren Beschichtungsmaterialien (11) vorteilhaft, die aufgestreut werden und so zunächst teilweise nur lose aufliegen. So kann sich der Materialverlust in Schritt c) verringern lassen. Das Anpressen kann mittels geeigneter Werkzeuge, beispielsweise Walzen, oder von Hand erfolgen, abhängig vor allem von der Art des Beschichtungsmaterials (11).

Es hat sich für die Qualität der Beschichtung (7) als vorteilhaft erweisen, wenn die Schritte b) und c) und ggf. c1) zumindest einmal wiederholt werden. So wird sichergestellt, dass eine ausreichende Menge an Beschichtungsmaterial (11) aufgebracht und mit dem Klebstoff (9) befestigt wird, um einerseits eine vollständige und lückenfreie Beschichtung (7) des Trägers (3) zu schaffen und andererseits eine mechanisch ausreichend stabile Beschichtung (7) sicherzustellen. Eine abschließende Klebstoffschicht auf der obersten Schicht des Beschichtungsmaterials (11) ist erfindungsgemäß nicht notwendigerweise vorgesehen. Vor allem bei natürlichen oder natürlich wirkenden Materialien geht das gute optische Erscheinungsbild verloren, wenn eine solche Klebstoffschicht beispielsweise glänzt oder die Farbe oder Oberfläche des Beschichtungsmaterial (11) verfälscht. Andererseits kann je nach Anwendungsbereich und Beschichtungsmaterial (11) eine abschließende Klebstoffschicht zweckmäßig sein, um das Ablösen der obersten Teilchen des Beschichtungsmaterials (11) zu vermeiden. In jedem Fall bleibt die Beschichtung (7) penetrierbar.

Ein dritter Aspekt der vorliegenden Erfindung bezieht sich auf die Verwendung des Körpers (1), wie er vorstehend im Zusammenhang mit dem zweidimensionalen Träger (3a) beschrieben wurde, als Geotextil. Unter "Geotextil" wird ein flächenhaftes und zumindest semipermeables Textil verstanden, das nach dem Stand der Technik als Baustoff beispielsweise im Bereich des Verkehrswegebaus oder Landschaftsbaus verwendet wird. Herkömmliche Geotextilien sind für geotechnische Sicherungsarbeiten wichtige Hilfsmittel.

Mit der vorliegenden Erfindung werden erstmals optisch ansprechende Geotextilien bereitgestellt, die nach ihrem Verlegen nicht mehr weiter bearbeitet werden müssen, da sie je nach Einsatzort bereits eine natürliche oder naturähnliche Oberfläche zeigen. Die erfindungsgemäßen Geotextilien eignen sich zudem auch für temporäre Gestaltungen, beispielsweise zur Unkrautvermeidung und der generellen Reduzierung des Pflegeaufwandes in Zierbeeten und Gartenanlagen oder zum Abdecken von Brachflächen während Bauarbeiten oder in vegetationsarmen Jahreszeiten.

Ein vierter Aspekt der vorliegenden Erfindung bezieht sich auf die Verwendung des Körpers (1), wie er vorstehend im Zusammenhang mit dem dreidimensionalen Träger (3b) beschrieben wurde, als Steckschaum. Ein solcher Steckschaum wird vor allem in der Frisch- oder Trockenfloristik eingesetzt.

Werden die erfindungsgemäßen Körper (1) dieser zweiten Ausführungsform der vorliegenden Erfindung als Steckschaum verwendet, kann das nachträgliche Abdecken zum Erreichen eines optisch ansprechenden Gesamteindrucks entfallen, da der Körper (1) durch seine Beschichtung (7) bereits selbst optisch ansprechend ausgeführt ist.

Weitere Ziele, Merkmale, Vorteile und Anwendungsmöglichkeiten ergeben sich aus der nachfolgenden Beschreibung von die Erfindung nicht einschränkenden Ausführungsbeispielen anhand der Figuren. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehung.

Es zeigen:
- Fig. 1: eine schematische Querschnitts-Darstellung eines erfindungsgemäßen Körpers 1,
- Fig. 2: eine schematische Darstellung eines erfindungsgemäßen Körpers 1 nach der ersten Ausführungsform der vorliegenden Erfindung und
- Fig. 3: eine schematische Darstellung eines erfindungsgemäßen Körpers 1 nach der zweiten Ausführungsform der vorliegenden Erfindung.

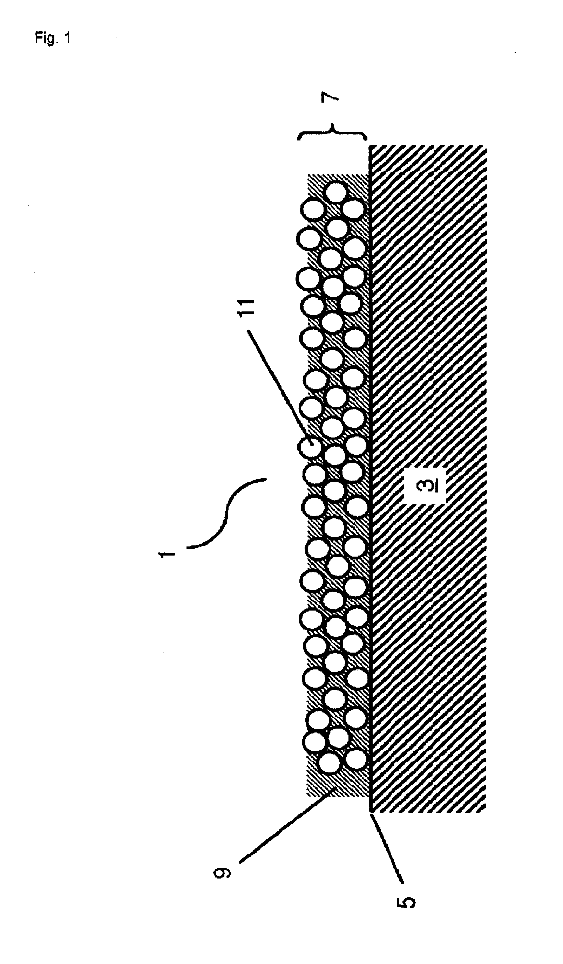

In Fig. 1 ist ein Teilbereich eines erfindungsgemäßen Körpers 1 im Querschnitt schematisch dargestellt. Auf der Oberfläche 5 des Trägers 3 ist zunächst ein Klebstoff 9 aufgebracht, in den das Beschichtungsmaterial 11 teilweise eingebettet ist und teilweise nach oben heraussteht. Klebstoff 9 und Beschichtungsmaterial 11 bilden zusammen die Beschichtung 7. Der dargestellte Querschnitt gilt unabhängig von den nachstehend erläuterten ersten und zweiten Ausführungsformen.

In der Darstellung der Fig. 1 ist das Beschichtungsmaterial 11 kleinteilig und partikulär ausgeführt, wie es beispielsweise bei Sanden oder Erden der Fall ist. Daneben können auch größerteilige Beschichtungsmaterialien 11 eingesetzt werden, beispielsweise Blätter, kleine Steine, Moose, Flechten, Nadeln, Wurzelwerk, Ästchen, Früchte, Schalen etc..

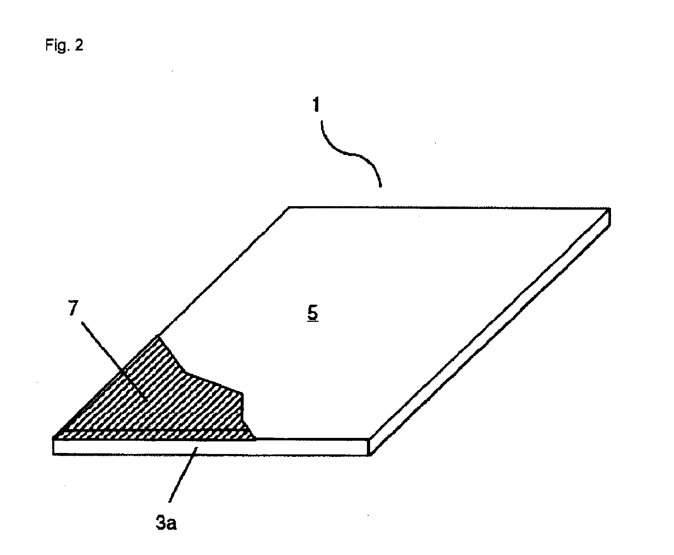

In Fig. 2 ist ein erfindungsgemäßer Körper 1 nach der ersten Ausführungsform der vorliegenden Erfindung schematisch dargestellt. Dieser Körper 1 besteht aus einem im wesentlichen zweidimensionalen Träger 3a, was schematisch durch eine flächige Darstellung gezeigt werden soll. Auf der Oberseite des Trägers 3a befindet sich die Oberfläche 5, welche in einem Teilbereich (schraffierte Fläche) mit der Beschichtung 7 dargestellt ist.

Der Träger 3a kann in dieser ersten Ausführungsform als Geotextil und/oder als Unkrautvlies und/oder als Folie und/oder als Schaumstoff ausgeführt sein.

Geotextilien sind prinzipiell bekannt und werden als flächenhafte und durchlässige Textilien angeboten, die im Bereich des Tief-, Wasser- und Verkehrswegebaus als Baustoffe dienen. Sie sind insbesondere für geotechnische Sicherungsarbeiten ein wichtiges Hilfsmittel.

Nach der vorliegenden Erfindung kann der Träger 3a als Geotextil aus natürlichen (z.B. Schilf, Jute, Kokos) oder künstlichen Materialien (z.B. Polyamid, Polyester, Polyethylen) bestehen und in Form von Geweben, Gewirken, Vliesstoffen und Verbundstoffen zum Einsatz kommen. Erfindungsgemäß wird der Körper 1 mit dem Träger 3a zum Dränen (Drainagieren), Bewehren, Schützen, Verpacken und zum Erosionsschutz eingesetzt. Dabei sind nach dem Ausbringen des erfindungsgemäßen Körpers 1 als Geotextil keine oder nur wenige Arbeiten notwendig, beispielsweise ein punktuelles Befestigen durch Bodenanker. Dies hängt vor allem von der Größe und dem Einsatzzweck ab. Ein Abdecken ist nicht erforderlich, da der erfindungsgemäße Körper 1 bereits eine natürliche oder naturidentische Beschichtung 7 aufweist.

Nach der vorliegenden Erfindung kann der Träger 3a aus den vorstehend genannten natürlichen oder künstlichen Materialien nicht nur als Geotextil, sondern auch im Dekorationsbereich verwendet werden, um beispielsweise Arrangements von größerer Ausdehnung zu schaffen.

Aufgrund der eingeschränkten Haltbarkeit werden natürliche Materialien nur für Anwendungen eingesetzt, die eine Lebenserwartung von ca. 2 Jahren haben. Hier stehen in der Regel jedoch weniger Aspekte der Haltbarkeit als die optischen Anforderungen und das Design im Vordergrund. So können beispielsweise temporär auf Baustellen oder in vegetationsarmen Perioden optisch ansprechende Abdeckungen vorgenommen werden oder großflächige Arrangements in Parks, Gärten oder Beeten angeordnet werden. Optisch simuliert der erfindungsgemäße Körper 1 nach der ersten Ausführungsform beispielsweise eine saubere (Erd-)Oberfläche in der gewünschten Ausprägung wie Beeterde, Waldboden oder Sand. Daneben sind aber auch künstlich abstrakte Bedeckungen möglich.

Die Geotextilien können beispielsweise in der Form von Unkrautvliesen eingesetzt werden, die typischerweise ein Gewicht von 80 g/m² bis 150 g/m² (ohne Beschichtung) bei einer Stärke von 150 µm bis 200 µm (ohne Beschichtung) haben und in Breiten von 1 m bis 3 m und Längen von 5 m bis 10 m angeboten werden. Solche erfindungsgemäßen Geotextilien bieten eine Lichtdurchlässigkeit von 10 % bis 20 % und eine Porosität von 60 % bis 80 % für die Atmungsaktivität, d.h. eine Durchlässigkeit für Sauerstoff. Sie sind von der Oberseite her wasserdurchlässig (semipermeabel) sowie durchlässig für Nährstoffe und unterdrücken wirkungsvoll ein Unkrautwachstum. Hierdurch kann auch unter dem erfindungsgemäßen Geotextil ein günstiges Mikroklima entstehen. Die Durchlässigkeit für Luft und Wasser kann sich abhängig von der Art der Beschichtungsmaterialien 11 ändern, insbesondere verringern.

Ebenso sind Pflanzungen in das erfindungsgemäße Geotextil möglich, indem es durchstoßen oder durchschnitten und anschließend um die neue Pflanze wieder herum gelegt wird.

Je nach Material des Trägers 3a und der Beschichtung 7 sind sie witterungsbeständig. Sie verhindern gleichzeitig ein Austrocknen des Bodens. Zudem können die nichtorganischen Materialien für den Träger 3a in der Brandschutzklasse B1 klassifiziert werden.

Anstelle der erfindungsgemäßen Geotextilien können als Träger 3a mit den gleichen oder sehr ähnlichen Eigenschaften auch semipermeable Folien mit Stärken von 10 µm bis 50 µm oder Schaumstoffe mit Stärken von 2 mm bis 30 mm eingesetzt werden

Gemeinsam haben die vorstehend aufgeführten Träger 3a die Eigenschaften als flexibles Material, das sich falten und/oder aufrollen lässt und damit trotz seiner Größe gut zu transportieren und zu handhaben ist. Ferner kann das Material des Trägers 3a gut zugeschnitten und damit an fast alle Anwendungsfälle optimal angepasst werden.

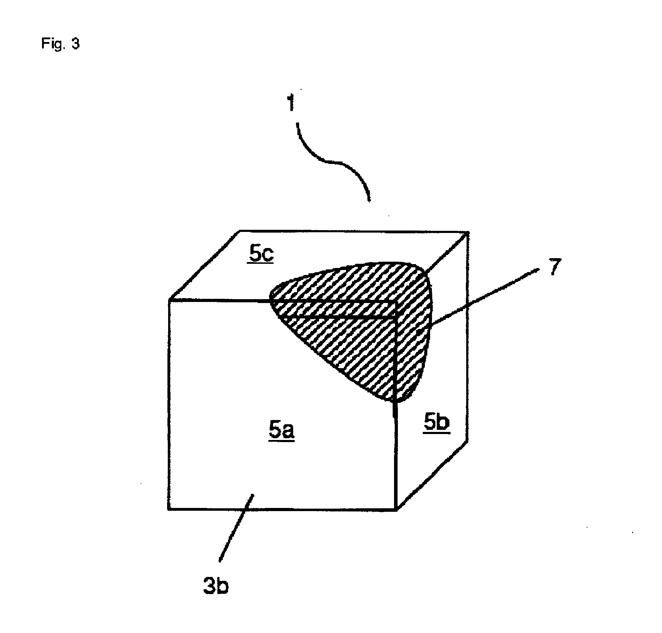

In Fig. 3 ist ein erfindungsgemäßer Körper 1 nach der zweiten Ausführungsform der vorliegenden Erfindung schematisch dargestellt. Dieser Körper 1 besteht aus einem im wesentlichen dreidimensionalen Träger 3b, was schematisch durch eine Würfelform dargestellt werden soll. Daneben kann der Träger 3b auch nahezu jede andere dreidimensionale Form haben, beispielsweise Quader, Platte, Kugel, Halbkugel, Kegel, Säule, Kreis, Ring, Kranz, Stern, oder, Herz. Zudem sind gemäß der vorliegenden Erfindung viele Freiformen sowie individuelle Gestaltungen zugänglich.

Auf der Oberseite des Trägers 3b in der beispielhaften Darstellung eines Würfels befinden sich die Oberflächen 5a, 5b und 5c, die Oberflächen 5d, 5e und 5f sind in der Darstellung der Fig. 3 nicht sichtbar. In einem Teilbereich (schraffierte Fläche) ist die Beschichtung 7 dargestellt.

Der Träger 3b kann in dieser ersten Ausführungsform insbesondere als Steckschaum ausgeführt sein. Typische, handelsübliche Steckschaumblöcke haben eine Größe von beispielsweise 23 cm x 11 cm x 8 cm. Die Kantenlängen eines solchen Trägers 3b liegen in der gleichen Dimension.

Im Gegensatz zum Körper 1 nach der ersten Ausführungsform lässt sich der Körper 1 nach der zweiten Ausführungsform nicht aufrollen und ist nicht biegsam oder flexibel. Dafür bietet der Körper 1 nach der zweiten Ausführungsform als Steckschaum eine sehr gute Formstabilität, die speziell zum Stecken von Dekorationsmaterial und/oder Frisch- und Trockenblumen ausreichend Halt bietet. Aufgrund einer guten Speicherfähigkeit für Wasser und ggf. Nährstoffe ist er neben der Trocken- und Kunstfloristik auch für die Frischfloristik sehr gut geeignet.

Der Körper 1 nach der zweiten Ausführungsform ist trotzdem gut formbar, indem er irreversibel zusammengedrückt wird oder Material des Trägers 3b abgetragen wird. Hierbei ist darauf zu achten, dass die Beschichtung nur dort mit abgetragen wird, wo sie beim gewünschten Einsatz nicht zu sehen wäre.

Bei der Herstellung des erfindungsgemäßen Trägers 3b können bereits Sonderformen realisiert werden. So können Gefäße aus unterschiedlichen Materialien mit dem Träger 3b befüllt werden. Ferner können andere Arten von Materialien mit dem Träger 3b vor seiner Beschichtung bestückt werden, beispielsweise Weidengeflechte, Äste, Stämme, Rinden und dergleichen.

Der erfindungsgemäße Träger 3b nach der zweiten Ausführungsform kann in der Brandschutzklasse B1 "schwer entflammbar" klassifiziert werden. Er besteht vorzugsweise aus Polyurethanschäumen, Polyethylenschäumen oder Phenolharzschäumen.

Eine spezielle Verwendung des Körpers 1 mit dem Träger 3b nach der zweiten Ausführungsform sind im Falle einer geschlossenen Porosität des Trägers 3b schwimmfähige Arrangements, beispielsweise Gestecke zur (zumindest zeitweisen) Dekoration von Teichen oder Wasserflächen.

In einer weiteren Ausführungsform wird der erfindungsgemäße Körper 1 mit dem Träger 3b in einem vorhandenen Gefäß bereitgestellt. Hierzu wird zunächst ein Gefäß wie ein Topf, eine Vase oder dergleichen mit dem Material des Trägers 3b bestückt. Insbesondere wird der Träger 3b direkt in das Gefäß hineingeschäumt und anschließend nach dem erfindungsgemäßen Verfahren mit der Beschichtung 7 versehen.

Zur Ermittlung der Kraft die zum manuellen Penetrieren des Trägers 3 und/oder der Beschichtung 7 aufgebracht werden muss, wurde eine Reihe von Versuchen durchgeführt, die in der nachstehenden Tabelle wiedergegeben werden. Dabei wurde ein erfindungsgemäßer Körper 1 mit vier verschiedenen Testelementen (Draht, 2 Kunst-Stängel, Naturrose mit den angegebenen Durchmessern) von Hand penetriert und die erforderlichen Kräfte mit einer Federwaage ermittelt.

| | Draht (Ø 1 mm) | Kunst-Stängel, abgerundet (Ø 2,5 mm) | Kunst-Stängel, abgerundet (Ø 4 mm) | Naturrose, gerade geschnitten (Ø 4 mm) |
|---|---|---|---|---|
| Nassschaum | 0,39 N | 1,27 N - 1,96 N | 3,43 N - 5,39 N | 2,26 N |
| Trockenschaum | 1,96 N | 3,24 N | 6,86 N | 6,38 N |
| PU-Schaum | 6,86 N | 6,86 N | 14,73 N | 17,65 N |
| Nassschaum / Erde | 2,75 N - 7,85 N | 9,81 N | 13,73 N | - |
| PU-Schaum / Erde | 3,34 N | 7,55 N - 14,71 N | 11,43 N | 11,77 N |
| Trockenschaum / Moos | 2,08 N - 4,02 N | 3,63 N | 14,71 N | 10,79 N |
| Nassschaum / Laub | 0,78 N - 0,98 N | 5,59 N | 8,53 N | 8,83 N - 10,79 N |
| Nassschaum / Sand | 0,78 N | 3,05 N | 3,73 N | 1,96 N |

### Bezugszeichen

- 1: Körper
- 3: Träger
- 3a: zweidimensionaler Träger
- 3b: dreidimensionaler Träger
- 5: Oberfläche
- 7: Beschichtung
- 9: Klebstoff
- 11: Beschichtungsmaterial

## Patentansprüche

1. Körper (1), umfassend
- einen Träger (3) und
- zumindest an einer der Oberflächen (5) des Trägers (3) eine Beschichtung (7), die einen Klebstoff (9) und zumindest ein Beschichtungsmaterial (11) aufweist, wobei das Beschichtungsmaterial (11) zumindest ein natürliches und/oder ein künstliches Material umfasst.

2. Körper (1) nach Anspruch 1, wobei der Träger (3) ein zumindest semipermeabler Träger (3a) ist, der eine im Wesentlichen zweidimensionale Ausdehnung aufweist.

3. Körper (1) nach Anspruch 2, wobei der semipermeable Träger (3a) ein Flächengewicht von 50 g/m² bis 300 g/m² aufweist.

4. Körper (1) nach Anspruch 2 oder 3, wobei der semipermeable Träger (3a) eine Dicke des Trägers (3a) zwischen 0,1 mm und 30 mm aufweist.

5. Körper (1) nach Anspruch 1, wobei der Träger (3) ein geschäumter, formstabiler Träger (3b) ist, der eine dreidimensionale Ausdehnung aufweist.

6. Körper nach einem der Ansprüche 1 bis 5, wobei die Beschichtung (7) von dem Träger (3) nicht delaminierbar ist.

7. Körper nach einem der Ansprüche 1 bis 6, wobei der Träger (3) und die Beschichtung (7) jeweils manuell penetrierbar sind.

8. Körper (1) nach Anspruch 7, wobei die Kraft zum manuellen Penetrieren der Beschichtung (7) höchstens 30 N beträgt.

9. Körper (1) nach Anspruch 8, wobei die Kraft zum manuellen Penetrieren der Beschichtung (7) zwischen 0,3 N und 25 N, vorzugsweise zwischen 2,5 N und 20 N, insbesondere zwischen 5 N und 15 N beträgt.

10. Verfahren zur Herstellung eines Körpers (1) nach einem der Ansprüche 1 bis 9, umfassend die Schritte:
a) Bereitstellen eines Trägers (3),
b) Behandeln zumindest einer der Oberflächen (5) des Trägers (3) mit einem Klebstoff (9),
c) Aufbringen eines Beschichtungsmaterials (11) auf die mit dem Klebstoff (9) behandelte Oberfläche (5) des Trägers (3) und
d) Fertigstellen einer Beschichtung (7), die den Klebstoff (9) und zumindest ein Beschichtungsmaterial (11) aufweist, auf dem Träger (3),
wobei das Beschichtungsmaterial (11) zumindest ein natürliches und/oderein künstliches Material umfasst.

11. Verfahren nach Anspruch 10, wobei das Verfahren nach Schritt c) einen Schritt c1) Anpressen des Beschichtungsmaterials (11) umfasst.

12. Verfahren nach Anspruch 10 oder 11, wobei die Schritte b) und c) und ggf. c1) zumindest einmal wiederholt werden.

13. Verwendung des Körpers (1) nach einem der Ansprüche 1 bis 4 und 5 bis 9 als Geotextil.

14. Verwendung des Körpers (1) nach einem der Ansprüche 1 und 5 bis 9 als Steckschaum.
